# EUROPÄISCHE PATENTSCHRIFT

(11) **EP 1 521 705 B1**
(45) Veröffentlichungstag und Bekanntmachung des Hinweises auf die Patenterteilung: **30.05.2012**
(21) Anmeldenummer: 03763881.4
(22) Anmeldetag: 17.07.2003
(51) Int. Cl.: B65B 9/04, B65D 75/58, B29C 65/74

(54) **VERFAHREN UND EINRICHTUNG ZUM VERPACKEN VON PRODUKTEN IN FOLIEN SOWIE FOLIENVERPACKTES PRODUKT**
METHOD AND DEVICE FOR PACKING PRODUCTS IN FILMS AND FILM-PACKED PRODUCT
PROCEDE ET DISPOSITIF POUR EMBALLER DES PRODUITS DANS DES FILMS, ET PRODUIT EMBALLE DANS DES FILMS

(30) Priorität: 17.07.2002 DE 10232330
(43) Veröffentlichungstag der Anmeldung: 13.04.2005
(73) Patentinhaber: Mars Incorporated, McLean, Virginia 22101-3883 (US)
(72) Erfinder: MERKEN-SCHILLER, Richard, 40489 Düsseldorf (DE); EBERHARDT, Stefan, 28207 Bremen (DE); CZECHOWSKI, Pamela, 41236 Mönchengladbach (DE)
(74) Vertreter: Winkler, Andreas Fritz Ernst
(86) Internationale Anmeldenummer: PCT/EP2003/007763
(87) Internationale Veröffentlichungsnummer: WO 2004/007292

(56) Entgegenhaltungen:
- EP-A- 0 650 904
- WO-A-01/83316
- US-A- 3 651 615
- US-A- 3 874 143
- US-A- 5 837 336
- US-B1- 6 326 069
- PATENT ABSTRACTS OF JAPAN vol. 018, no. 679 (M-1728), 21. Dezember 1994 (1994-12-21) -& JP 06 270258 A (SUMITOMO BAKELITE CO LTD), 27. September 1994 (1994-09-27)

## Beschreibung

Die Erfindung betrifft ein Verfahren zum Verpacken von Produkten in Folien mit den Schritten:
- Positionieren der Produkte auf einer kontinuierlich in einer Förderrichtung vorgeschobenen ersten Folienbahn; und
- Abdecken der Produkte mit einer kontinuierlich in die Förderrichtung vorgeschobene zweite Folienbahn, die planparallel zur ersten Folienbahn ausgerichtet ist.

Die Erfindung betrifft weiterhin eine Einrichtung zum Verpacken von Produkten in Folien nach einem solchen Verfahren sowie ein folienverpacktes Produkt, insbesondere Konfekt, das zwischen zwei Folien gepackt ist. Siehe z.B. US 5837336.

Produkte, insbesondere Konfekt wie Bonbons, Schokoladen, Pralinen, etc. werden herkömmlicherweise in Wickelpapier eingewickelt. Dies hat den Nachteil, dass das Produkt nicht hermetisch bis zum Verzehr verpackt ist.

Weiterhin ist bekannt, Produkte in Folien zu verpacken, die mit Hilfe von Wärme plastifiziert und verschweißt werden. Durch die Wärmeeinwirkung besteht die Gefahr, dass das Produkt in Mitleidenschaft gezogen wird und mindestens bereichsweise schmilzt.

Empfindliche Produkte werden herkömmlicherweise durch Verkleben von Folien verpackt. Dies ist relativ aufwendig, insbesondere weil der Klebstoff dünn und gleichmäßig auf die Verbindungsstellen aufgeklebt werden muss. Zudem sind die erforderlichen Klebflächen relativ groß.

Aufgabe der Erfindung war es daher, ein verbessertes Verfahren und eine verbesserte Einrichtung zum Verpacken von Produkten in Folien zu schaffen, um insbesondere eine wirtschaftliche Massenfertigung zu ermöglichen und hermetisch verpackte Produkte zu erhalten.

Die Aufgabe wird erfindungsgemäß durch das Verfahren gemäß Ansprüche 1, 2 gelöst.

Im Unterschied zu den herkömmlichen Folienverpackungen für Produkte wird nunmehr vorgeschlagen, die Folie mittels Ultraschall-Schweißen an den Außenkanten der Produkte miteinander zu verbinden. Dabei kann gleichzeitig ein Ultraschall-Trennen der übereinanderliegenden Folien an ausgewählten Stellen erfolgen und die einzelnen verpackten Produkte voneinander separiert werden.

Das Ultraschall-Schweißen und Ultraschall-Trennen kann in einer Verpackungsstraße mit hoher Taktgeschwindigkeit erfolgen, bei der die Produkte zwischen zwei kontinuierlich vorgeschobene Folienbahnen positioniert werden.

Das Ultraschall-Schweißen und -Trennen erfolgt vorzugsweise mit einem planparallel zu einer der Folien ausgerichteten Auflagetisch für eine angrenzende Folienbahn. Gegenüberliegend zu dem Auflagetisch und planparallel hierzu ist ein Schweißstempel oberhalb der anderen Folienbahn angeordnet, wobei der Schweißstempel zu Ultraschall-Schweißen und -Trennen auf den Auflagetisch zu bewegt wird. Durch Anregung des Schweißstempels und/oder des Auflagetischs mit Ultraschallschwingung und Zusammendrücken der Folien an Schweiß-und Schneidkanten mit dem Schweißstempel auf den Auflagetisch werden dann definierte Schweißnähte und Schnittkanten erzeugt.

Besonders vorteilhaft ist es, wenn der Auflagetisch eine integrierte Sonotrodeneinrichtung zum Erzeugen einer Ultraschallschwingung auf der Oberfläche des Auflagetischs hat. Die Folien werden dann im Bereich von Schweiß- und Schneidkanten des Schweißstempels, der nicht angeregt ist, auf den Auflagetisch gepresst. Die Schweiß- und Schneidkanten sind ein Abbild der Schweiß- und Schnittkanten der verpackten Produkte.

Auf diese Weise ist es möglich, den Schweißstempel relativ preiswert für verschiedene Produkte herzustellen, da keine Sonotrodenanordnung in den Schweißstempel integriert werden muss und die von der individuellen Produktform abhängigen Ausbreitungsbedingungen der Ultraschallwellen bei der Konstruktion der Schweißstempel nicht berücksichtigt werden müssen. Vielmehr kann ein universeller Auflagetisch mit integrierter Sonotrodenanordnung für jede Form des Schweißstempels genutzt werden. Auf diese Weise können die Werkzeugkosten und der Rüstaufwand vorteilhaft reduziert werden.

Weiterhin ist es vorteilhaft, mindestens eine Folie zur Aufnahme der Produkte vor dem Schritt des Positionierens der Produkte auf die Folienbahn vorzuformen. Hierbei können durch thermische, mechanische, Vakuumformung o. ä. Vertiefungen in die Folie zur Aufnahme der Produkte eingebracht werden. Die Aufgabe wird ferner durch die Einrichtung gemäß Ansprüche 7, 8 gelöst.

Der Schweißstempel ist auf den Auflagetisch zu und von dem Auflagetisch weg bewegbar gelagert. Die Folienbahnen mit den dazwischengelagerten Produkten werden zwischen dem Auflagetisch und Schweißstempel geführt.

Durch Pressen der Schweiß- und Schneidkanten des Schweißstempels auf den Auflagetisch und Anregen des Auflagetischs mit Ultraschwingungen werden an den Schweiß- und Schneidkanten definierte Schweiß- und Schnittnähte der übereinanderliegenden Folienbahnen erzeugt.

Vorzugsweise hat die Einrichtung weiterhin mindestens eine Vorformeinrichtung zum Vorformen mindestens eines der Folienwände derart, dass die Produkte in Vertiefungen der vorgeformten Folien aufnehmbar sind.

Die Schweiß- und Schneidkanten des Schweißstempels sind vorzugsweise derart geformt, dass eine Aufreißlasche an einer Außenkante der Produktverpackung ausgebildet wird und die erste und zweite Folie im Bereich der Aufreißlasche nicht miteinander verschweißt sind.

Das Problem bei der Ultraschall-Verschweißung von Produkten in Folien besteht nämlich darin, dass auch bei sehr schmalen Schweißnähten diese sehr stabil sind.

Es hat sich weiterhin herausgestellt, dass das Aufreißen einer ultraschallverschweißten Produktverpackung mit vertretbarem Kraftaufwand möglich wird, wenn eine Schweißnaht oder Schnittlinie von der Aufreißlasche quer in eine in die Schweißnaht an der Außenkante der Produktverpackung hineinläuft. Die Schweiß- und Schneidkanten des Schweißstempels sind daher vorzugsweise derart geformt, dass eine solche quer in die Schweißnaht an der Außennaht der Produktverpackung hineinlaufende Schweißnaht oder Schnittlinie gebildet wird.

Weiterhin ist es vorteilhaft, wenn die Schweiß- und Schneidkanten des Schweißstempels derart geformt sind, dass eine Schnittlinie zwischen zwei Außenkanten der Produktverpackung quer über eine der Folien der Produktverpackung verläuft. Durch Knicken der Produktverpakkung entlang der Schnittlinie reist die Produktverpackung an der Schnittlinie auf, die eine definierte Sollbruchstelle bildet.

Die Aufgabe wird weiterhin gelöst durch ein folienverpacktes Produkt gemäß Ansprüche 10, 11, insbesondere Konfekt, bei dem die Folien an den Außenkanten des Produkts durchgängig miteinander ultraschallverschweißt sind und mindestens eine Aufreißlasche an einer Außenkante vorgesehen ist.

Das folienverpackte Produkt hat vorzugsweise eine Schweißnaht oder Schnittlinie in der Aufreißlasche, die quer in eine Schweißnaht an der Außenkante der Produktverpackung hineinläuft, so dass die Schweißnaht an der Außenkante mit vertretbarem Kraftaufwand auftrennbar ist.

Vorzugsweise hat das folienverpackte Produkt zudem eine Schnittlinie zwischen zwei Außenkanten der Produktverpackung, die quer über eine der Folien der Produktverpackung verläuft.

In einer besonderen Ausführungsform, insbesondere von Herstellen von Prototypen-Produktverpackungen wird vorgeschlagen, eine bewegliche Andruckrolle oberhalb von dem Auflagetisch vorzusehen, die auf beliebigen Bahnen gesteuert mit definierten Druck über die Folienbahnen geführt werden kann. Auf diese Weise können Konturen zum Ultraschall-Schweißen und/oder Ultraschall-Trennen frei wählbar mit der Andruckrolle abgefahren werden.

Die Erfindung wird nachfolgend anhand der beigefügten Zeichnungen näher erläutert. Es zeigen:
- Fig. 1 -: eine perspektivische schematische Ansicht einer erfindungs gemäßen Einrichtung zum Verpacken von Produkten in Folien;
- Fig. 2 -: eine perspektivische Ansicht einer anderen Ausführungsform einer erfindungsgemäßen Einrichtung zum Verpacken von Produkten in Folien;
- Fig. 3 -: eine Draufsicht auf ein nicht beanspruchtes folienverpacktes Produkt mit Aufreißlasche;
- Fig. 4 -: eine Querschnittsansicht des folienverpackten Produkts aus der Figur 3;
- Fig. 5: eine Draufsicht auf ein folienverpacktes Produkt mit Aufreißlasche und quer zur Außenkante verlaufender Naht;
- Fig. 6: Draufsicht auf ein folienverpacktes Produkt mit Schnittlinie zwischen zwei Außenkanten.

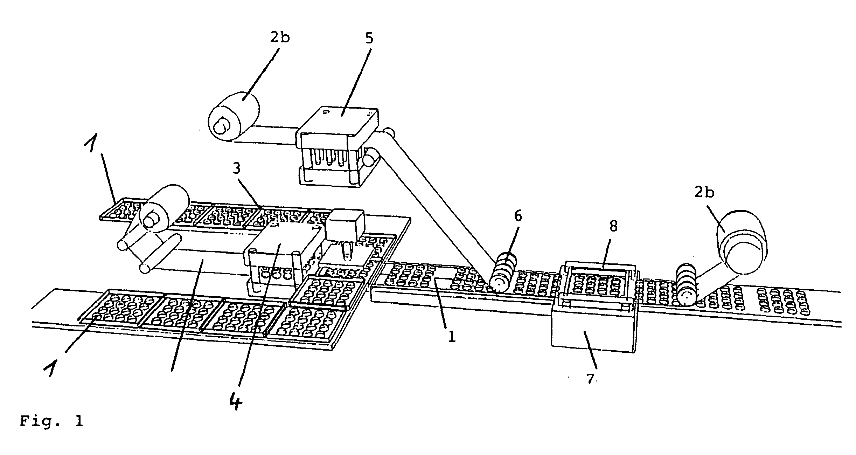

Die Figur 1 lässt eine erste Ausführungsform einer Einrichtung zum Verpacken von Produkten 1 in Folien 2 a, b in einer schematischen perspektivischen Darstellung erkennen. Die Folienbänder 2 a, 2 b werden kontinuierlich von einer Rolle abgerollt und über jeweils eine Fördereinrichtung vorgetrieben. Die auf Materialträgern 3 gelagerten Produkte 1 werden zu der ersten Folienbahn 2 a transportiert und mit Hilfe einer Positioniereinrichtung 4 auf der ersten Folienbahn 2 a positioniert. Die Positioniereinrichtung 4 ist hierzu als Handhabungsvorrichtung mit geeigneten Greifermitteln ausgerüstet. Nach der Positionierung der Produkte 1 auf die erste Folienbahn 2 a werden die Produkte 1 in Förderrichtung weitertransportiert und mit der zweiten Folienbahn 2 b abgedeckt. Hierzu ist die zweite Folienbahn 2 b planparallel zur ersten Folienbahn 2 a ausgerichtet.

Die zweite Folienbahn 2 b wird mit Hilfe einer Vorformeinrichtung 5 derart vorgeformt, dass Vertiefungen zur exakten Aufnahme der Produkte in die Folie geschaffen werden. Zur exakten Ausrichtung der Vertiefungen auf die Produkte beim Auflegen der zweiten Folienbahn 2 b auf die Produkte 1 und die erste Folienbahn 2 a ist eine Vergleichsmäßiger-Rolle 6 vorgesehen.

Nachdem die Produkte 1 durch die zweite Folienbahn 2b abgedeckt sind, erfolgt ein Ultraschall-Schweißen bzw. Ultraschall-Schneiden. Hierzu ist ein Auflagetisch 7 unterhalb der ersten Folienbahn 2 a vorgesehen, in den eine Sonotrodeneinrichtung zur Erzeugung einer Ultraschallschwingung integriert ist. Gegenüberliegend von dem Auflagetisch 7 ist ein Schweißstempel 8 angeordnet, der planparallel hierzu ausgerichtet ist und auf den Auflagetisch 7 zu und von dem Auflagetisch 7 weg bewegbar gelagert ist. Der Schweißstempel 8 hat erhabene Schweiß- und Schneidkanten, die ein Abbild der herzustellenden Schweiß- und Schnittkanten der verpackten Produkte sind.

Der Schweißstempel wird an den Schweiß- und Schneidkanten fest auf den Auflagetisch 7 gepresst, so dass die übereinanderliegenden Folien der Folienbahnen 2 a, 2 b durch die Ultraschallschwingung des Auflagetischs 7 angeregt werden. Hierbei wird eine sehr stabile Schweißnaht oder Schnittkante je nach Ausbildung der Schweiß- und Schneidkanten des Schweißstempels 8 erzeugt.

Der Schweißstempel 8 ist hierbei durch die Schweiß- und Schneidkanten produktabhängig ausgebildet. Durch den universellen Auflagetisch 7 mit integrierter Sonotrodeneinrichtung ist es nunmehr möglich, den Schweißstempel 8 als austauschbares Werkzeug relativ preiswert für verschiedenen Produktformen zu fertigen und bereitzustellen.

Nach dem Ultraschall-Schweißen und -Trennen wird die zweite Folienbahn 2 b reduziert um die zur Verpackung der Produkte 1 mit dem ersten Folienbahn 2 a verschweißten Abschnitte wieder aufgerollt und die verpackten Produkte vereinzelt.

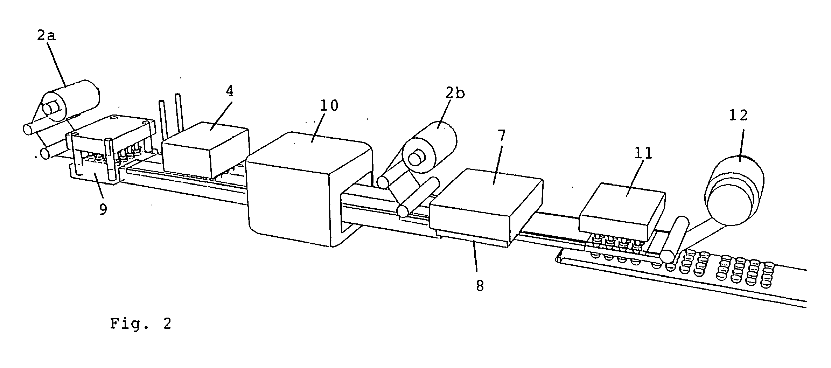

Die Figur 2 lässt eine andere Ausführungsform einer erfindungsgemäßen Einrichtung zur Folienverpackung von Produkten 1 erkennen, bei der die erste Folienbahn 2 a mit einer Vorformeinrichtung 9 derart vorgeformt wird, dass Vertiefungen zur Aufnahme der Produkte 1 entstehen. Das Vorformen kann beispielsweise thermisch, durch Vakuumziehen, oder auch durch sonstige Umformverfahren erfolgen. In der Figur 2 ist eine Vorformeinrichtung 9 mit einem halbflexiblen Formbett und einem relativ zu dem Formbett verfahrbaren Formpresse skizziert.

In Förderrichtung gesehen hinter der Vorformeinrichtung 9 ist eine Positioniereinrichtung 4 zum Positionieren der Produkte 1 auf die erste Folienbahn 2 a angeordnet. Die Positioniereinrichtung 4 ist in dem dargestellten Ausführungsbeispiel als Dosiervorrichtung ausgebildet, um das Produkt in die geschaffenen Vertiefungen in der ersten Folienbahn 2 a einzufüllen. Das Produkt 1 kann hierbei beispielsweise ein Konfekt, insbesondere eine Schokoladenmasse, sein.

Die erste Folienbahn 2 a durchläuft anschließend mit dem in die Vertiefungen eingefüllten Produkt 1 eine Kühlstrecke 10. Anschließend wird eine zweite Folienbahn 2 b, die planparallel zur ersten Folienbahn 2 a ausgerichtet ist, über die erste Folienbahn 2 a gelegt. Hierzu rollt die zweite Folienbahn 2 b kontinuierlich auf der ersten Folienbahn 2 a ab und deckt das in die Vertiefungen eingefüllte Produkt 1 vollständig ab.

Oberhalb von der zweiten Folienbahn 2 b ist ein Auflagetisch 7 mit integrierter Sonotrodeneinrichtung angeordnet und bildet Ultraschallschwingungen aus. Gegenüberliegend von dem Auflagetisch und relativ hierzu verfahrbar befindet sich ein Schweißstempel 8 mit Schweiß-und Schneidkanten jeweils angrenzend an die Außenkanten der in der ersten Folienbahn 2 a ausgebildeten Vertiefungen. Durch Pressen der Schweiß- und Schnittkanten des Schweißstempels 8 gegen den Auflagetisch 7, wobei die erste und zweite Folienbahn 2 a, 2 b mit dem eingefüllten Produkt 1 zwischen dem Auflagetisch 7 und dem Schweißstempel 8 befindlich ist, werden an den Schweiß- und Schneidkanten des Schweißstempels 8 die Ultraschallschwingungen durch die erste und zweite Folie 2 a, 2 b geleitet und Schweiß- und Schnittnähte erzeugt.

Anschließend erfolgt mit Hilfe eines Vereinzelungsautomaten 11 ein Vereinzeln der folienverpackten Produkte 1. Die verbleibende restliche Folie wird dann aufgewickelt 12.

Durch das Ultraschallschweißen der ersten und zweiten Folienbahn 2 a, 2 b aneinander können sehr dünne, jedoch extrem haltbare Schweißnähte erzeugt werden.

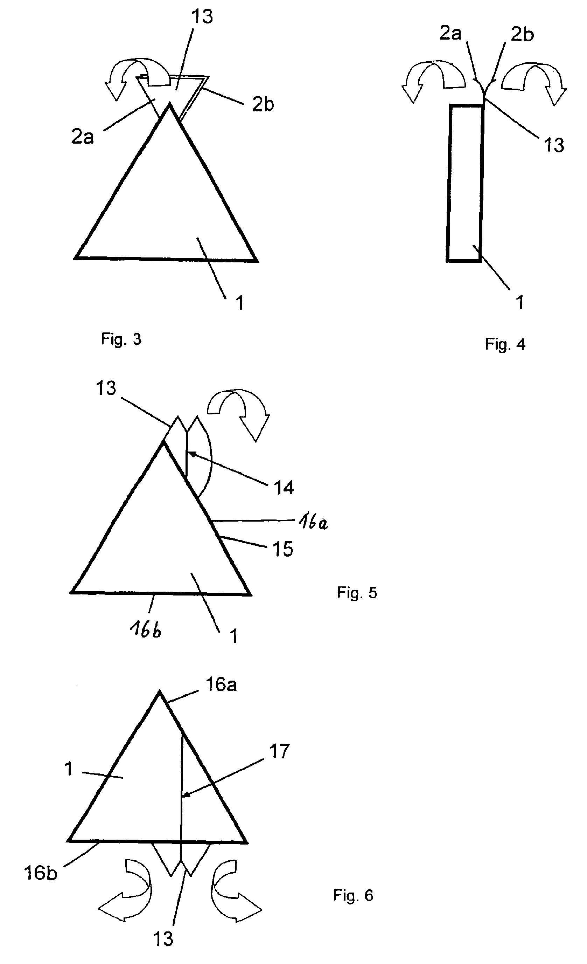

Um ein späteres Aufreißen der Produkte 1, insbesondere Konsumprodukte, durch den Verbraucher zu ermöglichen, ist es vorteilhaft, eine Aufreißlasche an den Außenkanten des Pro-dukts 1 auszubilden. Die Figur 3 lässt ein nicht beanspruchtes folienverpacktes Produkt 1 mit einer Aufreißlasche 13 in der Draufsicht erkennen. Die Aufreißlasche 13 ist aus an den Außenkanten des Produkts 1 überstehenden Abschnitten der ersten Folienbahn 2 a und zweiten Folienbahn 2 b gebildet. Die erste und zweite Folienbahn 2 a, 2 b ist im Bereich der Aufreißlasche 13 vorzugsweise mit einer Haftmasse aneinandergeheftet.

Die Fig. 4 lässt das folienverpackte Produkt aus der Figur 3 im Querschnitt erkennen. Es wird deutlich, dass die Folienverpackung durch voneinander Wegziehen der beiden Abschnitte der Aufreißlasche 13, d. h. der Abschnitte der ersten und zweiten Folienbahn 2 a, 2 b, die Produktverpackung aufgerissen werden kann. Die beiden Abschnitte der Aufreißlasche 13 sind hierbei mit einem Haftmittel lösbar aneinandergeheftet.

Die Fig. 5 lässt eine Ausführungsform eines folienverpackten Produktes in der Draufsicht erkennen. In einem Bereich einer Außenkante der Produktverpackung ist eine Schweißnaht oder Schnittlinie 14 ausgebildet, die quer in eine Schweißnaht 15 an der Außenkante der Produktverpackung hineinläuft. Hierdurch wird eine Sollbruchstelle an der Aufreißlasche 13 gebildet, so dass die Aufreißlasche 13 in zwei Hälften aufgetrennt und die Produktverpackung anschließend weiter entlang der Schweißnaht 15 an der Außenkante aufgerissen werden kann.

Die Fig. 6 lässt eine weitere Ausführungsform des folienverpackten Produktes 1 erkennen, bei dem quer über eine der Folien der Produktverpackung zwischen zwei Außenkanten 16 a, 16 b eine Schnittlinie 17 verläuft, die eine Sollbruchstelle in der Produktverpackung definiert. Die Schnittlinie 17 erstreckt sich in eine Aufreißlasche 13 hinein, die an der Außenkante 16 b der Produktverpackung angrenzt. Durch Knicken der Produktverpackung an der Schnittlinie 17 kann diese aufgerissen und mit Hilfe der Aufreißlasche 13 leicht geöffnet werden.

In einer nicht dargestellten besonderen Ausführungsform, insbesondere zur Herstellung von Prototypen-Produktverpackungen ist oberhalb von dem Auflagetisch eine frei gesteuert verfahrbare Andruckrolle vorgesehen, die entsprechend der zu schweißenden oder trennenden Konturen über die zweite Folienbahn 2 b verfahren wird. Der von der Andruckrolle über die erste und zweite Folienbahn 2 a, 2 b auf den Auflagetisch 7 ausgeübte Druck ist entsprechend den Anforderungen an die Ultraschall-Schweißnaht bzw. Trennnaht variabel. Die Andruckrolle kann mit einem X-Y-Schlitten, einem Roboter-Schwenkarm oder ähnliches geführt werden, wobei eine rechnergesteuerte Führung der Andruckrolle vorgesehen ist.

### Bezugszeichenliste

- 1: Produkt
- 2a, b: Folienbahn
- 3: Materialträger
- 4: Positioniereinrichtung
- 5: Vorformeinrichtung
- 6: Vergleichmäßiger-Rolle
- 7: Auflagetisch
- 8: Schweißstempel
- 9: Vorformeinrichtung
- 10: Kühlstrecke
- 11: Vereinzelungsautomat
- 12: restliche Folie
- 13: Aufreißlasche
- 14: Schweißnaht oder Schnittlinie
- 15: Schweißnaht
- 16a, b: Außenkanten
- 17: Schnittlinie

## Patentansprüche

1. Verfahren zum Verpacken von Produkten (1) in Folien (2 a, 2 b) mit den Schritten:
- Positionieren der Produkte (1) auf einer kontinuierlich in einer Förderrichtung vorgeschobenen ersten Folienbahn (2 a);
- Abdecken der Produkte (1) mit einer kontinuierlich in Förderrichtung vorgeschobenen zweiten Folienbahn (2 b), die planparallel zur ersten Folienbahn (2 a) ausgerichtet ist,
- Ultraschallschweißen der ersten und zweiten Folie (2 b) jeweils an Außenkanten (16 a, 16 b) der Produkte (1) und Ultraschalltrennen der übereinanderliegenden Folien (2 a, 2 b) an ausgewählten Stellen, und Ausbilden einer Aufreißlasche (13) an einer Außenkante (16a, b) der Produktverpackung, wobei eine Schweißnaht oder Schnittlinie (17) in der Aufreißlasche (13) gebildet wird, wobei die Schweißnaht oder Schnittlinie (17) quer in eine Schweißnaht (15) an der Außenkante (16 a, 16 b) der Produktverpackung hineinläuft;
- Vereinzeln der verpackten Produkte (1) oder von Gruppen der verpackten Produkte (1).

2. Verfahren zum Verpacken von Produkten (1) in Folien (2 a, 2 b) mit den Schritten:
- Positionieren der Produkte (1) auf einer kontinuierlich in einer Förderrichtung vorgeschobenen ersten Folienbahn (2 a);
- Abdecken der Produkte (1) mit einer kontinuierlich in Förderrichtung vorgeschobenen zweiten Folienbahn (2 b), die planparallel zur ersten Folienbahn (2 a) ausgerichtet ist,
- Ultraschallschweißen der ersten und zweiten Folie (2 b) jeweils an Außenkanten (16 a, 16 b) der Produkte (1) und Ultraschalltrennen der übereinanderliegenden Folien (2 a, 2 b) an ausgewählten Stellen, und Ausbilden einer Schnittlinie (17), die zwischen zwei Außenkanten (16a, b) der Produktverpackung quer über eine der Folien (2a, b) der Produktverpackung verläuft;
- Vereinzeln der verpackten Produkte (1) oder von Gruppen der verpackten Produkte (1).

3. Verfahren nach Anspruch 1 oder 2, **dadurch gekennzeichnet, dass** das Ultraschallschweißen und Ultraschalltrennen mit einem gegenüberliegenden planparallel zu einem Auflagetisch (7) oberhalb einer Folie (2) angeordneten Schweißstempel (8) erfolgt, wobei Schweißstempel (8) und Auflagetisch (7) zum Ultraschallschweißen und Ultraschalltrennen aufeinanderzu bewegt werden.

4. Verfahren nach Anspruch 3, **gekennzeichnet durch** Erzeugen einer Ultraschallschwingung auf der Oberfläche des Auflagetischs (7) mit einer in dem Auflagetisch (7) integrierten Sonotrodeneinrichtung und Pressen der Folien (2 a, 2 b) im Bereich von Schweiß- und Schneidkanten des Schweißstempels (8), welche ein Abbild der Schweiß- und Schnittkanten der verpackten Produkte (1) sind, auf den Auflagetisch (7).

5. Verfahren nach Anspruch 1, **dadurch gekennzeichnet, dass** das Ultraschall-Schweißen und Ultraschall-Trennen mit einer gegenüberliegenden planparallel zu dem Auflagetisch (7) oberhalb einer Folie (2) angeordneten Andruckrolle erfolgt, wobei die Andruckrolle entsprechend der zu schweißenden und trennenden Konturen über die Folie (2) mit einer Druckbelastung auf dem Auflagetisch (7) zum Ultraschall-Schweißen und Ultraschall-Trennen geführt wird.

6. Verfahren nach einem der vorhergehenden Ansprüche, **gekennzeichnet durch** Vorformen mindestens einer Folie (2 a, 2 b) zur Aufnahme der Produkte (1) vor dem Schritt des Positionierens der Produkte (1) auf die Folienbahn (2 a, 2 b).

7. Einrichtung zum Verpacken von Produkten (1) in Folien (2 a, 2 b) nach dem Verfahren nach einem der vorhergehenden Ansprüche mit:
- einer ersten Fördereinrichtung zum kontinuierlichen Vorschieben einer ersten Folienbahn (2 a),
- einer Positioniereinrichtung (4) zum Positionieren von Produkten (1) auf der ersten Folienbahn (2 a),
- einer zweiten Fördereinrichtung zum Abdecken der auf der ersten Folienbahn (2 a) positionierten Produkte (1) mit einer zweiten Folienbahn (2 b), die planparallel zur ersten Folienbahn (2 a) ausgerichtet ist,
- einem feststehenden Auflagetisch (7) mit einer integrierten Sonotrodenanordnung zum Anregen von Ultraschallschwingungen und
- einem gegenüberliegenden planparallel zu dem Auflagetisch (7) angeordneten Schweißstempel (8), wobei der Schweißstempel (8) Schweiß- und Schneidkanten als Abbild der herzustellenden Schweiß- und Schnittkanten der verpackten Produkte (1) hat und bewegbar auf den Auflagetisch (7) zu und von dem Auflagetisch (7) weg gelagert ist, wobei die Folienbahnen (2 a, 2 b) mit den in den dazwischen gelagerten Produkten (1) zwischen dem Auflagetisch (7) und dem Schweißstempel (8) geführt werden, und wobei die Schweiß- und Schneidkanten des Schweißstempels (8) derart geformt sind, dass eine Aufreißlasche (13) an einer Außenkante (16a, 16b) der Produktverpackung ausgebildet wird und eine Schweißnaht oder Schnittlinie (17) in der Aufreißlasche (13) gebildet wird, wobei die Schweißnaht oder Schnittlinie (17) quer in eine Schweißnaht (15) an der Außenkante (16a, 16b) der Produktverpackung hineinläuft.

8. Einrichtung zum Verpacken von Produkten (1) in Folien (2 a, 2 b) nach dem Verfahren nach einem der Ansprüche 1 bis 6 mit:
- einer ersten Fördereinrichtung zum kontinuierlichen Vorschieben einer ersten Folienbahn (2 a),
- einer Positioniereinrichtung (4) zum Positionieren von Produkten (1) auf der ersten Folienbahn (2 a),
- einer zweiten Fördereinrichtung zum Abdecken der auf der ersten Folienbahn (2 a) positionierten Produkte (1) mit einer zweiten Folienbahn (2 b), die planparallel zur ersten Folienbahn (2 a) ausgerichtet ist,
- einem feststehenden Auflagetisch (7) mit einer integrierten Sonotrodenanordnung zum Anregen von Ultraschallschwingungen und
- einem gegenüberliegenden planparallel zu dem Auflagetisch (7) angeordneten Schweißstempel (8), wobei der Schweißstempel (8) Schweiß- und Schneidkanten als Abbild der herzustellenden Schweiß- und Schnittkanten der verpackten Produkte (1) hat und bewegbar auf den Auflagetisch (7) zu und von dem Auflagetisch (7) weg gelagert ist, wobei die Folienbahnen (2 a, 2 b) mit den in den dazwischen gelagerten Produkten (1) zwischen dem Auflagetisch (7) und dem Schweißstempel (8) geführt werden, und wobei die Schweiß- und Schneidkanten des Schweißstempels (8) derart geformt sind, dass eine Schnittlinie (17) zwischen zwei Außenkanten (16a, 16b) der Produktverpackung gebildet wird, die quer über eine der Folien (2a, 2b) der Produktverpackung verläuft.

9. Einrichtung nach Anspruch 7, **gekennzeichnet durch** mindestens eine Vorformeinrichtung (9) für mindestens eines der Folienbahnen (2 a, 2 b) derart, dass die Produkte (1) in Vertiefungen der vorgeformten Folien (2 a, 2 b) aufnehmbar sind.

10. Folienverpacktes Produkt (1), insbesondere Konfekt, das zwischen zwei Folien (2 a, 2 b) gepackt ist, wobei die Folien (2 a, 2 b) an Außenkanten (16 a, 16 b) des Produkts (1) durchgängig miteinander ultraschallverschweißt sind und mindestens eine Aufreißlasche (13) an einer Außenkante (16 a, 16 b) vorgesehen ist, **dadurch gekennzeichnet, dass** eine Schweißnaht oder Schnittlinie (17) in der Aufreißlasche (13) gebildet ist, wobei die Schweißnaht oder Schnittlinie (17) quer in eine Schweißnaht an der Außenkante (16 a, 16 b) der Produktverpackung hineinläuft.

11. Folienverpacktes Produkt (1), insbesondere Konfekt, das zwischen zwei Folien (2 a, 2 b) gepackt ist, wobei die Folien (2 a, 2 b) an Außenkanten (16 a, 16 b) des Produkts (1) durchgängig miteinander ultraschallverschweißt sind, **dadurch gekennzeichnet, dass** eine Schnittlinie (17) zwischen zwei Außenkanten (16 a, 16 b) der Produktverpackung quer über eine der Folien (2 a, 2 b) der Produktverpackung verläuft.

## Claims

1. Method of packaging products (1) in films (2a, 2b) comprising the steps of:
- positioning the products (1) on a first sheet of film (2a) which is continuously advanced in a conveying direction;
- covering the products (1) with a second sheet of film (2b) which is continuously advanced in the conveying direction and which is aligned plane-parallel to the first sheet of film (2a),
- ultrasonic welding of the first and second film (2b) in each case on outer edges (16a, 16b) of the products (1) and ultrasonic separation of the superimposed films (2a, 2b) at selected locations, and formation of a pull tab (13) on an outer edge (16a, 16b) of the product packaging, wherein a weld seam or cutting line (17) is formed in the pull tab (13), the weld seam or cutting line (17) running transversely into a weld seam (15) on the outer edge (16a, 16b) of the product packaging;
- separating the packaged products (1) or groups of the packaged products (1).

2. Method of packaging products (1) in films (2a, 2b) comprising the steps of:
- positioning the products (1) on a first sheet of film (2a) which is continuously advanced in a conveying direction;
- covering the products (1) with a second sheet of film (2b) which is continuously advanced in the conveying direction and which is aligned plane-parallel to the first sheet of film (2a),
- ultrasonic welding of the first and second films (2b) in each case on outer edges (16a, 16b) of the products (1) and ultrasonic separation of the superimposed films (2a, 2b) at selected locations, and formation of a cutting line (17) which extends transversely over one of the films (2a, 2b) of the product packaging between two outer edges (16a, 16b) of the product packaging.
- separating the packaged products (1) or groups of the packaged products (1).

3. Method as claimed in Claim 1 or 2, **characterised in that** the ultrasonic welding and ultrasonic separation are carried out with an opposing welding punch (8) disposed plane-parallel with respect to a supporting table (7) above a film (2), wherein the welding punch (8) and the supporting table (7) are moved towards one another for the ultrasonic welding and ultrasonic separation.

4. Method as claimed in Claim 3, **characterised by** generation of an ultrasonic oscillation on the surface of the supporting table (7) with a sonotrode device integrated in the supporting table (7), and pressing of the films (2a, 2b) onto the supporting table (7) in the region of welding and cutting edges of the welding punch (8), which are an image of the welded and cut edges of the packaged products (1).

5. Method as claimed in Claim 1 or 2, **characterised in that** the ultrasonic welding and ultrasonic separation are carried out with an opposing pressure roller disposed plane-parallel with respect to a supporting table (7) above a film (2), wherein the pressure roller is guided over the film (2) according to the contours to be welded and cut, pressure being exerted on the supporting table (7) for ultrasonic welding and/or ultrasonic separation.

6. Method as claimed in any one of the preceding claims, **characterised by** pre-shaping of at least one film (2a, 2b) to receive the products (1) before the step of positioning the products (1) on the sheet of film (2a, 2b).

7. Method of packaging products (1) in films (2a, 2b) according to the method claimed in any one of the preceding claims, comprising:
- a first conveyor means for continuously advancing a first sheet of film (2a),
- a positioning device (4) for positioning products (1) on the first sheet of film (2a),
- a second conveyor means for covering the products (1) positioned on the first sheet of film (2a) with a second sheet of film (2b), which is aligned plane-parallel with respect to the first sheet of film (2a),
- a fixed supporting table (7) with an integrated sonotrode arrangement for generating ultrasonic oscillations, and
- an opposing welding punch (8) disposed plane-parallel with respect to a supporting table (7) above a film (2), wherein the welding punch (8) has welding and cutting edges as an image of the welded and cut edges to be produced on the packaged products (1) and is mounted on the supporting table (7) so as to be movable on the supporting table (7) towards and away from the supporting table (7), wherein the sheets of film (2a, 2b) with the products (1) held between them are guided between the supporting table (7) and the welding punch (8), and wherein the welding and cutting edges of the welding punch (8) are shaped in such a way that a pull tab (13) is formed on an outer edge (16a, 16b) of the product packaging and a weld seam or cutting line (17) is formed in the pull tab (13), wherein the weld seam or cutting line (17) runs transversely into a weld seam (15) on the outer edge (16a, 16b) of the product packaging.

8. Device for packaging products (1) in films (2a, 2b) according to the method claimed in any one of Claims 1 to 6, comprising:
- a first conveyor means for continuously advancing a first sheet of film (2a),
- a positioning device (4) for positioning products (1) on the first sheet of film (2a),
- a second conveyor means for covering the products (1) positioned on the first sheet of film (2a) with a second sheet of film (2b), which is aligned plane-parallel with respect to the first sheet of film (2a),
- a fixed supporting table (7) with an integrated sonotrode arrangement for generating ultrasonic oscillations, and
- an opposing welding punch (8) disposed plane-parallel with respect to a supporting table (7), wherein the welding punch (8) has welding and cutting edges as an image of the welded and cut edges to be produced on the packaged products (1) and is mounted on the supporting table (7) so as to be movable on the supporting table (7) towards and away from the supporting table (7), wherein the sheets of film (2a, 2b) with the products (1) held between them are guided between the supporting table (7) and the welding punch (8), and wherein the welding and cutting edges of the welding punch (8) are shaped in such a way that a cutting line (17) is formed between two outer edges (16a, 16b) of the product packaging which extends transversely over one of the films (2a, 2b) of the product packaging.

9. Device as claimed in Claim 7, **characterised by** at least one pre-shaping device (9) for at least one of the sheets of film (2a, 2b) in such a way that the products (1) can be received in recesses in the pre-shaped films (2a, 2b).

10. Film-packaged product (1), in particular confectionery, which is packed between two films (2a, 2b), wherein the films (2a, 2b) are ultrasonically welded continuously to one another on the outer edges (16a, 16b) and at least one pull tab (13) is provided on an outer edge (16a, 16b), **characterised in that** a weld seam or cutting line (17) is formed in the pull tab (13), the weld seam or cutting line (17) running transversely into a weld seam on the outer edge (16a, 16b) of the product packaging;

11. Film-packaged product (1), in particular confectionery, which is packed between two films (2a, 2b), wherein the films (2a, 2b) are ultrasonically welded continuously to one another on the outer edges (16a, 16b), **characterised in that** a cutting line (17) extends transversely over one of the films (2a, 2b) of the product packaging between two outer edges (16a, 16b) of the product packaging.

## Revendications

1. Procédé pour emballer des produits (1) dans des films (2a, 2b) comportant les étapes consistant à :
- positionner les produits (1) sur une première bande de film (2a) déplacée en continu dans un sens d'avance ;
- recouvrir les produits (1) d'une deuxième bande de film (2b) déplacée en continu dans le sens d'avance, laquelle bande est orientée de manière coplanaire par rapport à la première bande de film (2a) ;
- souder par ultrasons le premier et le deuxième film (2b) respectivement à des arêtes extérieures (16a, 16b) des produits (1) et séparer par ultrasons les films (2a, 2b) se superposant en des emplacements sélectionnés, et réaliser une languette de déchirage (13) sur une arête extérieure (16a, 16b) de l'emballage du produit, un joint de soudure ou une ligne de découpe (17) étant formé dans la languette de déchirage (13), le joint de soudure ou la ligne de découpe (17) rentrant de manière transversale dans un joint de soudure (15) au niveau de l'arête extérieure (16a, 16b) de l'emballage du produit ;
- individualiser les produits emballés (1) ou des groupes de produits emballés (1).

2. Procédé servant à emballer des produits (1) dans des films (2a, 2b) comportant les étapes consistant à :
- positionner les produits (1) sur une première bande de film (2a) déplacée en continu dans un sens d'avance ;
- recouvrir les produits (1) d'une deuxième bande de film (2b) déplacée en continu dans un sens d'avance, laquelle bande est orientée de manière coplanaire par rapport à la première bande de film (2a) ;
- souder par ultrasons le premier et le deuxième film (2b) respectivement au niveau d'arêtes extérieures (16a, 16b) des produits (1) et séparer par ultrasons les films (2a, 2b) se superposant en des emplacements sélectionnés, et réaliser une ligne de découpe (17) qui s'étend entre deux arêtes extérieures (16a, b) de l'emballage du produit transversalement au-dessus d'un des films (2a, 2b) de l'emballage du produit ;
- individualiser les produits emballés (1) ou des groupes de produits emballés (1).

3. Procédé selon la revendication 1 ou 2, **caractérisé en ce que** le soudage par ultrasons et la séparation par ultrasons sont effectués avec une matrice de soudage (8) opposée disposée au-dessus d'un film (2) de manière coplanaire par rapport à une table d'appui (7), la matrice de soudage (8) et la table d'appui (7) étant déplacées l'une sur l'autre pour le soudage par ultrasons et la séparation par ultrasons.

4. Procédé selon la revendication 3, **caractérisé par** la production d'une onde ultrasonore sur la surface de la table d'appui (7) au moyen d'un dispositif de sonotrodes intégré à la table d'appui (7) et par la compression des films (2a, 2b) dans la zone des arêtes de soudure et de découpe de la matrice de soudage (8), lesquelles sont une image des arêtes de soudure et de découpe des produits emballés (1), sur la table d'appui (7).

5. Procédé selon la revendication 1, **caractérisé en ce que** le soudage par ultrasons et la séparation par ultrasons sont effectués avec un rouleau de pression opposé disposé au-dessus d'un film (2) de manière coplanaire par rapport à la table d'appui (7), le rouleau de pression étant guidé suivant les contours à souder et à séparer, au-dessus du film (2) avec une charge de pression sur la table d'appui (7) pour le soudage par ultrasons et la séparation par ultrasons.

6. Procédé selon l'une quelconque des revendications précédentes, **caractérisé par** un préformage d'au moins un film (2a, 2b) servant à recevoir les produits (1) avant l'étape consistant à positionner les produits (1) sur la bande de film (2a, 2b).

7. Dispositif servant à emballer des produits (1) dans des films (2a, 2b) selon le procédé selon l'une quelconque des revendications précédentes, comportant :
- un premier dispositif convoyeur servant à déplacer en continu une première bande de film (2a),
- un dispositif de positionnement (4) servant à positionner des produits (1) sur la première bande de film (2a),
- un deuxième dispositif convoyeur servant à recouvrir les produits (1) positionnés sur la première bande de film (2a) d'une deuxième bande de film (2b), qui est orientée de manière coplanaire par rapport à la première bande de film (2a),
- une table d'appui (7) stationnaire comportant un ensemble de sonotrodes intégré pour engendrer des ondes ultrasonores et
- une matrice de soudage (8) opposée disposée de manière coplanaire par rapport à la table d'appui (7), la matrice de soudage (8) présentant des arêtes de soudure et de découpe comme image des arêtes de soudure ou de découpe à réaliser sur les produits (1) emballés et est logée de manière à pouvoir être déplacée sur la table d'appui (7) vers la table d'appui (7) et en s'éloignant de cette dernière, les bandes de film (2a, 2b) étant guidées entre la table d'appui (7) et la matrice de soudage (8) avec les produits (1) logés entre ces dernières, et l'arête de soudure et l'arête de découpe de la matrice de soudage (8) étant formées de telle manière qu'une languette de déchirage (13) est réalisée sur une arête extérieure (16a, 16b) de l'emballage du produit et qu'un joint de soudure ou une ligne de découpe (17) sont formés dans la languette de déchirage (13), sachant que le joint de soudure ou la ligne de découpe (17) rentrent de manière transversale dans le joint de soudure (15) au niveau de l'arête extérieure (16a, 16b) de l'emballage du produit.

8. Dispositif servant à emballer des produits (1) dans des films (2a, 2b) selon le procédé selon l'une quelconque des revendications 1 à 6, comportant :
- un premier dispositif convoyeur servant à déplacer en continu une première bande de film (2a),
- un dispositif de positionnement (4) servant à positionner des produits (1) sur la première bande de film (2a),
- un deuxième dispositif convoyeur servant à recouvrir les produits (1) positionnés sur la première bande de film (2a) d'une deuxième bande de film (2b), qui est orientée de manière coplanaire par rapport à la première bande de film (2a),
- une table de travail (7) stationnaire comportant un ensemble de sonotrodes intégré servant à engendrer des ondes ultrasonores et
- une matrice de soudage (8) opposée, disposée de manière coplanaire par rapport à la table d'appui (7), la matrice de soudage (8) présentant des arêtes de soudure et de découpe comme images des arêtes de soudure et de découpe à réaliser sur les produits (1) emballés et est logée de manière à pouvoir être déplacée sur la table d'appui (7) vers la table d'appui (7) et en s'éloignant de cette dernière, les bandes de film (2a, 2b) étant guidées entre la table d'appui (7) et la matrice de soudage (8) avec les produits (1) logés entre ces dernières, et les arêtes de soudure et de découpe de la matrice de soudage (8) étant formées de telle manière qu'une ligne de découpe (17) est formée entre deux arêtes extérieures (16a, 16b) de l'emballage du produit, laquelle s'étend de manière transversale au-dessus d'un des films (2a, 2b) de l'emballage du produit.

9. Dispositif selon la revendication 7, **caractérisé par** au moins un dispositif de préformage (9) pour au moins une des bandes de film (2a, 2b) de telle manière que les produits (1) peuvent être logés dans des creux des films (2a, 2b) préformés.

10. Produit (1) emballé dans des films, en particulier une confiserie, qui est emballé entre deux films (2a, 2b), les films (2a, 2b) étant soudés entre eux par ultrasons de manière interconnectée au niveau des arêtes extérieures (16a, 16b) du produit (1) et au moins une languette de déchirage (13) étant prévue au niveau d'une arête extérieure (16a, 16b), **caractérisé en ce qu'**un joint de soudure ou une ligne de découpe (17) sont formés dans la languette de déchirage (13), le joint de soudure ou la ligne de découpe (17) rentrant de manière transversale dans un joint de soudure au niveau de l'arête extérieure (16a, 16b) de l'emballage du produit.

11. Produit (1) emballé dans des films, en particulier une confiserie, qui est emballé entre deux films (2a, 2b), les films (2a, 2b) étant soudés entre eux par ultrasons de manière interconnectée au niveau des arêtes extérieures (16a, 16b) du produit (1), **caractérisé en ce qu'**une ligne de découpe (17) s'étend de manière transversale au-dessus d'un des films (2a, 2b) de l'emballage du produit, entre deux arêtes extérieures (16a, 16b) de l'emballage du produit.
